# EUROPEAN PATENT APPLICATION

(11) **EP 1 240 950 A2**
(43) Date of publication of application: **18.09.2002**
(21) Application number: 02251832.8
(22) Date of filing: 14.03.2002
(51) Int. Cl.: B05D 1/36

(54) **Method for preparing fracture-resistant multi-component coatings at low temperature**

(30) Priority: 16.03.2001 US 276525 P
(71) Applicant: ROHM AND HAAS COMPANY, Philadelphia, Pennsylvania 19106-2399 (US)
(72) Inventor: Schall, Donald Craig, Lansdale, Pennsylvania 19446 (US)
(74) Representative: Kent, Venetia Katherine

(57) **Abstract**

A method for producing a fracture-resistant multi-component coating on the surface of a substrate is disclosed wherein the temperature is no greater than 0°C at some point during the method. The method includes applying to the surface a first component including an aqueous binder composition, and a second component including an absorber. The coating is fracture-resistant during application, drying, and use at temperatures no greater than 0°C.

## Description

The present invention relates to a method for producing a multi-component fracture-resistant coating on the surface of a substrate at temperatures equal to or less than 0°C.

One of the many important features of coatings is their ability to resist fracture during application and use. All other properties being equal, a coating that is fracture resistant will maintain its desirable initial appearance far longer than one that is not fracture resistant. Furthermore, initially formed cracks are vulnerable to further tearing, and invite assault by water and waterborne impurities that may attack the coating itself or delaminate the coating from the surface to which it is affixed. One of many illustrations of the importance of forming and maintaining high integrity in coatings can be found in coatings intended to protect substrates, e.g., metals. A high integrity, fracture-resistant coating will protect a metal surface for years, whereas a coating riddled with pits and cracks will begin corroding almost immediately. Another such illustration is provided by traffic paints and the roadway markings they form. Although protection of roadway surfaces is not their main function, roadway markings do need to be crack resistant to prevent penetration of water through the coating, which typically spawns further cracking and ultimately delamination of the coating from the roadway surface. In addition, the presence of cracks is usually a sign that film formation is of poor quality. Such films are often very brittle and of poor strength. In traffic paints and the roadway markings they produce, good film formation and resultant film strength are needed if glass beads imbedded in the coating are to provide reflective properties, including visibility at night, and resistance to wearing away upon repeated rollovers by the tires of vehicles and scraping by snowplows. In short, initially formed cracks, which may, in and of themselves, degrade appearance, often become larger fissures that induce unsightly appearance and catastrophic failure of the coating.

Aqueous coating compositions provide an important, environmentally friendly, alternative to environmentally objectionable solvent-based coating compositions. These aqueous coating compositions can often be made fracture resistant through the prudent selection of binder polymer. Used herein, the term "binder polymer" refers to a polymer that is included in the aqueous coating composition and that augments and participates in film formation during application of the aqueous coating composition to the surface of a substrate, and becomes an integral part of the resultant coating. A binder polymer useful in the present invention will typically be present in an aqueous coating composition as dispersed particles.

Film formation at ambient temperatures becomes difficult or impossible when an attempt is made to use polymer particles having a Tg greater than 70°C as the binder polymer. It is common that any coating that does form will be riddled with cracks immediately upon application, or soon thereafter. The particles of high Tg polymer may come into contact with one another during formation of the coating, but their interaction and co-mingling is insufficient to form a uniform coating. Conversely, binder polymers having Tgs of 70°C or less tend to flow together and intermingle intimately as water evaporates from coatings containing them. Such intermingling often results in the coating having a uniform, fused structure, and it is well known to those skilled in the art that coatings having uniform, fused structures are stronger films and tend to resist fracture during application, resist infiltration by water and waterborne impurities during use, and resist premature cracking and delamination during prolonged use.

In practice, it is observed that an aqueous coating composition that forms a smooth coating when applied at, for example, 10°C or above will lose its ability to form a uniform, crack-free coating as the temperature of applying that coating composition to the substrate surface is reduced toward the freezing point of water (0°C). This loss of ability to form a crack-free coating may derive from such causal factors as the increased rigidity of the binder polymer as the temperature is reduced, but when the temperature of a freshly applied, and drying, coating drops to 0°C, catastrophic failure sets in due to formation of ice crystals before evaporation of water can occur. This phenomenon has hitherto rendered impossible the application of aqueous coating compositions at 0°C and below, yet the need exists to apply aqueous coating compositions at temperatures near or below the freezing point of water. In particular, many areas of the globe experience temperatures of 0°C or less for more than three months out of the year and some for much longer. In such climates, it may not be an option to wait until temperatures moderate before reapplying roadway markings that, for example, may have been scraped off the road by snow plows. Similarly, the application of aqueous coating compositions to the exterior surfaces of, for example, newly constructed buildings, may be required prior to the end of a prolonged period of cold weather.

US-A-5,922,398 discloses a fast-drying waterborne coating composition containing latex particles having pendant amine-functional groups. The latex particles have a Tg greater than about 0°C and are capable of film formation at application temperatures of approximately 20°C, or in some cases as low as 5°C provided that a coalescing agent has been added. An amount of base (*e.g*., ammonia) is added to raise the pH of the composition to a point where essentially all of the amine functional groups are in a non-ionic state. Also disclosed are methods of producing fast drying coatings on suitable substrates by application of the coating compositions. Upon formation of a film, the base evaporates, allowing the pendant amine moieties to become protonated. The resultant pendant ammonium moieties then interact with anionic surfactants to destabilize the aqueous system and, thereby, speed drying. Although the aqueous coating composition of US-A-5,922,398 exhibits accelerated drying at approximately 20°C, there exists no mechanism within that coating composition to prevent formation of ice crystals, or to reduce their size, if it were to be applied to the surface of a substrate at 0°C or less. Such low temperature application of the coating composition would lead to catastrophic fracture of the resultant coating during and after application.

We have surprisingly discovered that when an absorber is applied to the surface of a substrate along with a separate aqueous coating composition, it is possible for that application to occur at or below 0°C to give a uniform, durable, fracture-resistant coating. These multi-component aqueous coating compositions are particularly useful for formation of coatings, for example, roadway markings, outdoors in winter.

The present invention relates to a method for preparing a fracture-resistant multi-component coating on a surface of a substrate, said method comprising the steps of:
(i) applying component A to said surface;
(ii) applying component B to said surface; and
(iii) allowing said coating to dry;
wherein said component A comprises at least one water insoluble absorber selected from the group consisting of organic super absorbent polymer, ion-exchange resin, hollow sphere polymer, molecular sieve, talc, inorganic absorber, porous carbonaceous material, non-porous carbonaceous material, and mixtures thereof;
wherein said component B comprises a first aqueous binder composition; and
wherein the temperature of said coating is no greater than 0°C at some point during said method.

A second aspect of the method of the present invention further comprises the step of applying component C comprising a second aqueous binder composition to said surface.

A third aspect of the method of the present invention further comprises the step of applying component G comprising glass beads to said surface.

Used herein, the following terms have these definitions:
"multi-component" refers to coating compositions having two or more components applied to a substrate in one or more steps, and to the coatings made thereby.
"Component A" includes at least one water insoluble absorber.
"Component B" includes an aqueous binder composition.
"Component C". Whenever a sequence of steps in the method of the present invention includes two components, each of which includes an aqueous binder composition, one of the components will be designated as component B and the other as component C. Components B and C may be identical to one another, or they may differ in composition.

The term "roadway" is used herein as a generic term and it includes any indoor or outdoor solid surface that is or may be exposed to pedestrians, moving vehicles, tractors, or aircraft continuously, continually or intermittently. Some non-limiting examples of a "roadway" include highways, streets, driveways, sidewalks, runways, taxiing areas, tarmac areas, parking lots, rooftops, and indoor floors (e.g., factory floors and floors inside shopping malls). The surface material may be masonry, tar, asphalt, resins, concrete, cement, stone, stucco, tiles, wood, polymeric materials and combinations thereof. It is also within the scope of the invention to apply such a multi-component aqueous coating composition over another one or more layers of fresh or aged coating already applied on the surface of the substrate.

A "roadway marking" is a coating applied to the surface of a roadway. A "roadway marking" may also be a coating on any surface of any substrate associated with a roadway, including signs, barricades, medial strips, and signal devices.

A "traffic paint" is a coating composition used to form roadway markings. The traffic paints of the present invention are multi-component aqueous coating compositions.

The term "fracture" may be used as a noun or as a verb. Used as a noun, a "fracture" is a defect, craze, void, pit, hole, crack, fissure, or any other break in the continuity of a coating. These fractures may have dimensions ranging from nanometers to meters.

Used as a verb, "to fracture" means "to cause a fracture to occur".

A "fracture-resistant" coating is a coating that resists formation of fractures during its application and use. For example, such a coating would be resistant to fracture formation while drying. Such a coating would also be resistant to formation of new fractures and enlargement of old fractures during prolonged use.

The terms "simultaneous" and "simultaneously" mean two steps of a method occur at the same time, or that the two steps at least overlap partially in time.

"Tg" is the "glass transition temperature" of a polymeric phase. The glass transition temperature of a polymer is the temperature at which a polymer transitions from a rigid, glassy state at temperatures below Tg to a fluid or rubbery state at temperatures above Tg. The Tg of a polymer is typically measured by differential scanning calorimetry (DSC) using the mid-point in the heat flow versus temperature transition as the Tg value. A typical heating rate for the DSC measurement is 20°C/minute. The Tg of various homopolymers may be found, for example, in *Polymer Handbook,* edited by J. Brandrup and E. H. Immergut, Interscience Publishers. The Tg of a polymer is calculated by using the Fox equation (T.G. Fox, *Bull. Am. Physics Soc.,* Volume 1, Issue No. 3, page 123 (1956)).

The term "fast-drying" is used herein to mean that a film of a so designated coating composition having a wet coating thickness of 330 microns displays a dry-through time of less than two hours at 90 percent relative humidity at 23°C and minimal air flow when applied without inclusion of absorbers. The term "fast-drying aqueous binder composition" refers to an aqueous dispersion of at least one binder polymer that, when applied to a substrate, forms a film having a dry-through time conforming to the definition of "fast-drying" just given.

The term "slow-drying aqueous binder composition" is used herein to mean an aqueous dispersion of at least one binder polymer that, when applied to a substrate, forms a film having a dry through time equal to or greater than two hours at 90 percent relative humidity at 23°C and minimal air flow when applied at 330 microns film thickness without inclusion of absorbers. It is also within the present invention that addition of an absorber to a "slow-drying aqueous binder composition" at some point during or after application to a substrate can produce a "fast-drying multi-component waterborne coating composition".

The present invention can be used in many coating, painting or marking applications where applying the coating composition occurs at substrate surface temperatures of no greater than 0°C. For instance, the method and composition of the present invention can be used for traffic paints, roadway markings, house paints, maintenance coatings for exterior or interior surfaces of buildings, walls, roofs, and other structures. The surface of the substrate may be wood, metal (such as aluminum, steel and others) polymers, plaster and others. Other applications include coating metal substrates present in a wide variety of manufactured articles such as signs, boats, cars, etc. All of the substrates may already have one or more layers of existing coating or paint which may be fresh or aged.

Although not wishing to be bound by any particular theory, I hypothesize that, in the method of the present invention, absorber particles serve as loci for concentration of water during and after application of the fracture-resistant multi-component aqueous coating composition to the surface of a substrate. The concentration of water increases rapidly in the absorber particles upon contact of those absorber particles with the aqueous binder composition. This sequestration of water in the absorber particles and compensating decrease in the water concentration in the remainder of the coating, i.e., in the aqueous binder composition, has several advantageous effects. First, reduced water concentration in the aqueous binder composition assures that the total volume of ice crystals that may potentially be formed in the aqueous binder composition is greatly reduced. Second, the binder particles are brought into closer contact with one another in the aqueous binder composition, facilitating faster, more complete film formation, improved homogeneity of the coating, and greater resistance to fracture during and after drying. Third, if crystallization of water does occur, the high concentration of water within the absorber particles coupled with the ability of the absorber particles as a whole, as well as individual structural features within them, to nucleate crystallization virtually assures that ice crystals will initiate within the absorber particles, or near the surface of those particles. Formation of large crystals within the aqueous binder composition is, then, effectively suppressed in favor of formation of miniscule crystals having dimensions equal to or less that the size of the absorber particles. Such miniscule ice crystals, nucleated and bound by the absorber particles, are not large enough to either be deleterious to the initial appearance of the coating, or to initiate large cracks during subsequent use. In summary, the presence of absorber particles facilitates rapid formation of a homogeneous film from the aqueous binder composition and promotes effective sequestration of any ice crystals that do form in such a way that the water contained in them can evaporate slowly without leaving cracks or encouraging subsequent crack formation.

It is generally desirable to have additional components added to the coating composition to form the final formulation for traffic paints or other coatings described herein. These additional components include, for example, thickeners; rheology modifiers; dyes; sequestering agents; biocides; dispersants; pigments, such as, titanium dioxide, organic pigments, carbon black; extenders, such as calcium carbonate, talc, clays, silicas and silicates; fillers, such as glass or polymeric microspheres, quartz and sand; anti-freeze agents; plasticizers; adhesion promoters such as silanes; coalescents; wetting agents; surfactants; slip additives; crosslinking agents; defoamers; colorants; tackifiers; waxes; preservatives; freeze/thaw protectors; corrosion inhibitors; and anti-flocculants.

The polymer of the present invention is referred to herein as the "binder polymer". The specific method by which a binder polymer is prepared is not of particular importance to the present invention. Binder polymers useful in aqueous binder compositions (either slow-drying or fast-drying) may be prepared via bulk and solution polymerization, and by aqueous dispersion, suspension, and emulsion polymerization, or any other method that would produce the desired polymer soluble, partially soluble, or dispersed in water or a mixture of water and a water-miscible solvent, or capable of being dissolved, partially dissolved, or dispersed in water or a mixture of water and a water-miscible solvent. A preferred method for preparing the binder polymers to be used in the aqueous binder compositions of the present invention is aqueous emulsion polymerization. Polymers thus prepared are usually stabilized by adding anionic, nonionic, or cationic surfactants, or by the incorporation of anionic or cationic moieties into the polymer itself during synthesis. The emulsion polymerization can be carried out by a number processes such as those described in Blackley, D. C. *Emulsion Polymerisation;* Applied Science Publishers: London, 1975; Odian, G. *Principles of Polymerization;* John Wiley & Sons: New York, 1991; *Emulsion Polymerization of Acrylic Monomers;* Rohm and Haas, 1967.

Anionically stabilized polymer particles can, for example, be prepared from a wide range of acrylic and methacrylic monomers, including C₁-C₁₈ (meth)acrylate esters, methyl (meth)acrylate, ethyl (meth)acrylate, isomers of propyl (meth)acrylate, isomers of butyl (meth)acrylate, 2-ethylhexyl (meth)acrylate, isobornyl (meth)acrylate, isodecyl (meth)acrylate, oleyl (meth)acrylate, palmityl (meth)acrylate, stearyl (meth)acrylate, 2-hydroxyethyl (meth)acrylate, 3-hydroxypropyl (meth)acrylate, 4-hydroxybutyl (meth)acrylate, glycidyl (meth)acrylate; acid functional monomers, such as, acrylic acid, methacrylic acid, crotonic acid, itaconic acid, fumaric acid and maleic acid; monomethyl itaconate; monomethyl fumarate; monobutyl fumarate; maleic anhydride; acrylamide or substituted acrylamides; (meth)acrylonitrile; sodium vinyl sulfonate; phosphoethyl(meth)acrylate; acrylamido propane sulfonate; diacetone acrylamide; acetoacetylethyl methacrylate; acrolein and methacrolein; dicyclopentadienyl methacrylate; dimethyl meta-isopropenylbenzyl isocyanate; isocyanatoethyl methacrylate; styrene or substituted styrenes; butadiene; ethylene; vinyl acetate or other vinyl esters; vinyl monomers, such as, for example, vinyl halide, preferably vinyl chloride, vinylidene halide, preferably vinylidene chloride, N-vinyl pyrrolidone; amino monomers, such as, for example, N,N-dimethylaminoethyl (meth)acrylate, N,N-dimethylaminopropyl methacrylamide, and oxazolidinoethyl methacrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

Optionally, a low level of a multi-ethylenically unsaturated monomer such as, for example, 0-5% by weight based on the weight of the dry polymer of allyl (meth)acrylate, diallyl phthalate, 1,4-butylene glycol di(meth)acrylate, 1,6-hexanediol di(meth)acrylate, and trimethylolpropane tri(meth)acrylate may be used subject to maintaining a sufficiently low level of crosslinking that, in the case of solution polymers, unmanageable viscosity is not attained, or that, in the case of emulsion polymers, effective film formation is not compromised.

Conventional surfactants may be used to stabilize the emulsion polymerization systems before, during, and after polymerization of monomers. These conventional surfactants will usually be present at levels of 0.1 percent to 6 percent by weight based on the weight of total monomer. At least one anionic, nonionic, or amphoteric surfactant may be used, or mixtures thereof. Alternatively, all, or a portion, of the particle stabilization may be provided by initiator fragments, such as those of persulfates, when the fragments become incorporated into the polymer chain. Examples of anionic emulsifiers include sodium lauryl sulfate, sodium dodecyl benzene sulfonate, dioctylsulfosuccinate, sodium polyoxyethylene lauryl ether sulfate, sodium dodecyl diphenyloxide disulfonate and other diphenylsulfonate derivatives, and sodium salt of *tert*-octylphenoxyethoxypoly(39)ethoxyethyl sulfate. Examples of nonionic surfactants include glycerol aliphatic esters, oleic acid monoglyceride, polyoxyethylene aliphatic esters, polyoxyethylene glycol monostearate, polyoxyethylene cetyl ether, polyoxyethylene glycol monolaurate, polyoxyethylene glycol monooleate, polyoxyethylene glycol stearate, polyoxyethylene higher alcohol ethers, polyoxyethylene lauryl ether, polyoxyethylene nonylphenol ether, polyoxyethylene octylphenol ether, polyoxyethylene oleyl ether, polyoxyethylene stearyl ether, polyoxyethylenesorbitan aliphatic esters, polyoxyethylenesorbitan monolaurate, polyoxyethylenesorbitan monooleate, polyoxyethylenesorbitan monopalmitate, polyoxyethylenesorbitan monostearate, polyoxyethylenesorbitan trioleate, polyoxyethylenesorbitan tristearate, polyoxyethylenesorbitol tetraoleate, stearic acid monoglyceride, tert-octylphenoxyethylpoly(39)ethoxyethanol, and nonylphenoxyethylpoly(40)ethoxyethanol.

Amphoteric surfactants may also be utilized solely, or in combination with anionic, nonionic, or mixtures thereof, to stabilize particles of the polymer during and after aqueous emulsion polymerization, or other dispersion polymerizations. For the purpose of stabilizing particles of polymer in aqueous systems, amphoteric surfactants may be used at levels of 0.1 percent to 6 percent by weight based on the weight of total monomer. Useful classes of amphoteric surfactant include aminocarboxylic acids, amphoteric imidazoline derivatives, betaines, and macromolecular amphoteric surfactants. Amphoteric surfactants from any of these classes may be further substituted with fluorocarbon substituents, siloxane substituents, or combinations thereof. Useful amphoteric surfactants can be found in Amphoteric Surfactants, ed. B.R. Bluestein and C.L. Hilton, Surfactant Series Vol. 12 Marcel Dekker NY, NY(1982).

Initiation of emulsion polymerization may be carried out by the thermal decomposition of free radical precursors, also called initiators herein, which are capable of generating radicals suitable for initiating addition polymerization. Suitable thermal initiators such as, for example, inorganic hydroperoxides, inorganic peroxides, organic hydroperoxides, and organic peroxides, are useful at levels of from 0.05 percent to 5.0 percent by weight, based on the weight of monomers. Free radical initiators known in the art of aqueous emulsion polymerization include water-soluble free radical initiators, such as hydrogen peroxide, tert-butyl peroxide; alkali metal (sodium, potassium or lithium) or ammonium persulfate; or mixtures thereof. Such initiators may also be combined with reducing agents to form a redox system. Useful reducing agents include sulfites such as alkali metal meta bisulfite, or hyposulfite, sodium thiosulfate, or sodium formaldehyde sulfoxylate. The free radical precursor and reducing agent together, referred to as a redox system herein, may be used at a level of from about 0.01% to 5%, based on the weight of monomers used. Examples of redox systems include t-butyl hydroperoxide/sodium formaldehyde sulfoxylate/Fe(II) and ammonium persulfate/sodium bisulfite/sodium hydrosulfite/Fe(II). The polymerization temperature may be 10°C to 110°C, depending upon such things as free radical initiator decomposition constant and reaction vessel pressure capabilities.

Frequently, a low level of chain transfer agent such as a mercaptan (for example: n-octyl mercaptan, n-dodecyl mercaptan, butyl or methyl mercaptopropionate, mercaptopropionic acid at 0.05 to 6% by weight based on total weight of monomer) is employed to limit the formation of any significant gel fraction or to control molecular weight.

When the binder polymer is present as emulsion polymer particles, those particles have a particle size of 50 to 2,000 nanometers (nm), more preferably, 50 to 1000 nm, and, most preferably, 50 to 700 nm. Particle sizes can be measured by microscopy, or by using the Brookhaven Model BI-90 Particle Sizer supplied by Brookhaven Instruments Corporation, Holtsville, New York, which employs a quasi-elastic light scattering technique to measure the size of the particles. All ranges used herein are inclusive and combinable.

The binder polymer of the present invention has a glass transition temperature (Tg) of in the range -60°C to 70°C, preferably -40°C to 70°C, more preferably -20°C to 70°C, and most preferably -10°C to 70°C. The aqueous binder composition of the present invention may be either slow-drying or fast-drying. It is preferred that the aqueous binder composition be fast-drying. Certain of the fast-drying aqueous binder compositions described in the next paragraphs have Tg (glass transition temperature) ranges for the binder polymer that are somewhat narrower than the range -10°C to 70°C disclosed for the binder polymers of the present invention. Such narrowed Tg ranges should in no way be construed as limiting the present invention. Any of these fast drying coating compositions may be prepared such that they contain binder polymer having Tg as low as -60°C and as high as 70°C.

EP-B-0409459 discloses a fast drying aqueous coating composition including an anionically stabilized emulsion polymer having Tg no lower than 0°C, a polyamine functional polymer, and a volatile base in an amount such that the composition has a pH where substantially all of the polyamine functional polymer is in a non-ionic state, and wherein more than 50% by weight of the polyamine functional polymer will be soluble at pH values of 5 to 7 on evaporation of the volatile base. In the non-ionic state (i.e., deprotonated), polyamine interaction with the anionically stabilized emulsion and any other anionic ingredients which may be present in the composition is eliminated. The volatile base must be volatile enough to be released under air drying conditions. During film formation, the volatile base evaporates with the result that the amine moieties of the polyamine functional polymer become protonated to form ammonium moieties which, in turn, interact with the anionic ingredients to destabilize the coating composition and thereby accelerate drying.

WO 96/22338 discloses a fast drying aqueous coating composition including from 95 to 99 weight percent of an anionically stabilized aqueous emulsion of a copolymer having a Tg of from -10°C to 50°C, the copolymer containing two or more ethylenically unsaturated monomers, wherein from 0 to 5 weight percent of the monomers are α,β-ethylenically unsaturated aliphatic carboxylic acid monomers; from 0.2 to 5 weight percent of a polyimine having a molecular weight of from 250 to 20,000; and from 0.2 to 5 weight percent of a volatile base, wherein the composition has a pH from 8 to 11, and wherein a cast film of the composition loses the volatile base by evaporation to accelerate drying. The term "polyimine", used in the context of WO 96/22338, indicates that the polymer was prepared using imine monomers (*e.g*., ethyleneimine). The resultant polymer contains no imine functionality. Instead, the polymer contains amine functionality as part of the polymer backbone. It is this polyamine functional polymer that is deprotonated in the presence of volatile base. Upon formation of a film from the aqueous coating composition, the volatile base is released, allowing the amine moieties in the polymer backbone to protonate.

US 5,922,398 discloses aqueous coating compositions containing a latex having pendant amine-functional groups, wherein such latex has a Tg equal to or greater than 0°C and is capable of film formation at application temperatures, and an amount of base sufficient to raise the pH of the composition to a point where essentially all of the amine functional groups are in a non-ionic state. The amine-functionalized latexes have a number average molecular weights in the range of 1,000 to 1,000,000 and particle sizes that vary between 20 and 1000 nanometers. These latexes may be in the form of single, or multi-staged particles. The multi-staged particles include at least two mutually incompatible copolymers having any of a wide variety of morphologies, including core/shell, interpenetrating network, and multiple core. The latex polymer may also contain acid-functional moieties. When acid-function moieties are present, the weight ratio of amine-functional moieties to acid-functional moieties is generally at least 3 to 1. Both amine-functional moieties and acid-functional moieties may be incorporated into the same latex particle or into separate latex particles. Amine functional monomers polymerized to prepare amine-functional latex particles are used at a level of at least 2% by weight, based on total monomers. Acid functional monomers polymerized to prepare acid-functional latex particles are used at a level that is usually less than 10% by weight, based on total monomers. Latex particles are stabilized by surfactants, including anionic and non-ionic emulsifiers. The coating compositions of US 5,922,398 use volatile base (*e.g*., ammonia) to stabilize the amine-functional moieties of the latex particles against interaction with surfactants during storage and application of films. Once applied, the films lose volatile base by evaporation, the amine-functional particles protonate to become ammonium-functional particles which, in turn, interact with surfactant, causing destabilization of the latex particles and acceleration of drying.

US 5,824,734 discloses an improved fast drying coating composition particularly adapted for use as a traffic paint. This basic waterborne coating for traffic paint includes an aqueous emulsion containing an acrylic film forming polymer, a stabilizing system for the emulsion which is pH sensitive, and mineral pigment. The acrylic film forming polymer is a hydrophobic acrylate containing polymer. The hydrophobic monomers polymerized to produce the hydrophobic acrylate containing polymer include alkyl esters of acrylic or methacrylic acid having an alkyl ester portion containing between 1 to 12 carbon atoms. The hydrophobic acrylate containing polymer further incorporates from about 0.1 to 5% by weight of a secondary or tertiary amino acrylate and 0.1 to 5% by weight of crosslinkable monomers, such as N-alkylol acrylamides and N-alkylol methacrylamides, both weight percents based on total weight of polymer. The hydrophobic acrylate containing polymer should further contain less than 5 weight percent of hydrophilic monomers, based on total polymer. The aqueous dispersion is typically stabilized by a combination of anionic and non-ionic surfactants, and is pH sensitive. The pH is maintained above 7, preferably by addition of a volatile base like ammonia, until application of the coating onto a surface. Loss of base then effects collapse of the emulsion and the water is exuded from the amide- or amine-functional acrylate containing film forming hydrophobic polymer.

WO 98/52698 discloses a coating material including a substrate having a surface and a coating thereupon, wherein the coating is prepared by: a) contacting the surface of the substrate with a stable aqueous dispersion that contains a polymer having pendant strong cationic groups, and pendant weak acid groups; or b) contacting the surface of the substrate with a stable aqueous dispersion that contains a first polymer having pendant strong cationic groups, and a stable aqueous dispersion of a second polymer having pendant weak acid groups, the contact of the polymers with the surface being made in any order, or concurrently. When the stable aqueous dispersion contains a polymer having pendant strong cationic groups and pendant weak acid groups (*i.e.,* coating "a" of WO 98/52698), it is a necessary condition that the surface of the substrate is, or is treated to be, sufficiently basic that the stable aqueous dispersion sets in less time than the time required for a latex that only contains pendant strong cation groups, or pendant weak acid groups, to set. The cationic groups are, for example, quaternary ammonium moieties, while the weak acid groups are, for example, carboxylic acid moieties. When coating "a" contacts the basic surface of the substrate, the base removes the proton from the weak acid, producing an anionic species that interacts with the cationic moiety to form crosslinks, destabilize the dispersion, and accelerate drying of the film. Cationic surfactants present in the aqueous dispersion are also rendered inactive by interaction with the anions generated from the weak acid groups. When coating "b" of WO 98/52698 is applied to a substrate, there is no requirement that the substrate be basic because one dispersion is cationically stabilized and the other is anionically stabilized such that, upon mixing, the oppositely charged surfactants interact to inactivate one another. Further, because the weak acid functional latex particles are anionically stabilized in coating "b", it is possible to adjust the pH of the aqueous dispersion such that the weak acid moieties are deprotonated and available to interact with cationic species upon film formation. The various routes to destabilization are possible contributors to accelerated drying of films.

Absorbers suitable for use in component A of the present invention are preferably water insoluble. However, it is possible for an absorber of the present invention to be effective even if a portion of that absorber is susceptible to dissolution upon addition to the aqueous system. "Water insoluble" is defined herein as having a solubility of less than 0.5 grams of the absorber per 100 grams of water at 20°C. More preferably, the solubility is less than 0.1 gram of the absorber per 100 grams of water at 20°C, and most preferably the solubility is less than 0.05 gram of the absorber per 100 grams of water at 20°C. All of these solubility ranges are inclusive and combinable.

Many "absorbers" having liquid or gas absorption or adsorption properties may be used for the present invention. The absorbers should be able to adsorb and/or absorb small polar molecules like water, ammonia, C₁-C₆ alkyl amines, C₁-C₆ alkyl alcohols, or a combination thereof. It is preferred that an absorber is has a substantial number of polar sites per gram of absorber or per square meter of surface area and these polar sites can interact or react with small polar molecules such as water, ammonia, C₁-C₆ alkyl alcohols, C₁-C₆ alkyl amines, and mixtures thereof. Examples of absorbers include organic super absorbent polymers, ion-exchange resins, hollow sphere polymers, molecular sieves, inorganic absorbents, porous carbonaceous materials, non-porous carbonaceous materials, and mixtures thereof. Not all such materials may be used for all applications. For example, where light color in the application is desired, carbonaceous materials may not be suitable in all instances because they are black.

The particle size of an absorber should be in the range of from 0.05 µ to 5000 µ, preferably in the range of 10 µ to 1500 µ, where µ denotes micron. In general, uniform distributions of all the solid components, including the absorber, are preferred.

The amount of an absorber or a mixture of absorbers used in the present invention is in the range of from 0.01 weight % to 90 weight %, based on the total weight of the two- or multi-component coating composition. A preferred range is from 0.1 weight % to 70 weight %, more preferably from 1 weight % to 30 weight%, all ranges being inclusive and combinable. Key parameters to be considered in determining the amount of absorber to be used include: the amount of the binder composition, the type of the binder composition, the water content, the type of absorber, the properties of the absorber, the desired thickness of the film, the paint application conditions (temperature, relative humidity, substrate, history of substrate surface, and combinations thereof), and other ingredients present in the final composition of the paint formulation, and combinations thereof.

Any ion exchange resin (IER) may be used as the absorber in the present invention. The term "ion exchange resin" is used interchangeably with "IER" herein. In particular, the IERs may have positive or negative ionic moieties, or combinations of positive and negative ionic moieties, attached to their polymer chains. Many IERs in the acid or metal ion form may be used. For the present invention, a preferred IER comprises either a strong acid cation exchange resin or a weak acid cation exchange resin. The acid functional groups may be present in the monomer(s) used and/or they may be generated after polymerization or copolymerization is completed. Crosslinked polymers are preferred. For the present invention, a preferred IER comprises either a strong acid cation exchange resin or a weak acid cation exchange resin. Mixtures of IERs also may be used.

Examples of suitable IER(s) include organic ion exchange resins having sulfonic acid groups (-SO₃H, sulfonate functionality), carboxylic acid groups (-COOH, carboxylate functionality), iminodiacetate groups, phosphonic acid groups (-PO(OH)₂, phosphonate functionality), alkylaminophosphonic acid groups (aminophosphonate functionality, such as -NR¹CH₂PO(OH)₂ where R¹ is methyl, ethyl, etc.) and mixtures thereof. Most of the polymers mentioned so far are based on polystyrene or crosslinked polystyrene backbone structures. Crosslinked polyacrylic acid or polymethacrylic acid polymers may be used too. They are weakly acidic. Sulfonic acid groups are generally strong acid groups. Carboxylic-acid-group and sulfonic-acid-group containing IERs are preferred.

The counter ions (cations) to the acid functional group include H⁺, Li⁺, Na⁺, K⁺, Rb⁺, Cs⁺, NH₄⁺, Be⁺⁺, Mg⁺⁺, Ca⁺⁺, Sr⁺⁺, Ba⁺⁺, Zn⁺⁺, Al⁺⁺⁺ and mixtures thereof. Organic ammonium cations also may be used. Examples include R¹R²R³R⁴N⁺ where the R's are independently selected from C₁-C₁₂ alkyl groups, phenyl, substituted phenyl groups, aryl groups and substituted aryl groups, such as (CH₃)₄N⁺, (C₂H₅)₄N⁺ and mixtures thereof.

Examples of commercially available IER's which can be used for the present invention include those sold under the tradenames: AMBERLYST™ 15, AMBERLYST™ 131 PDry, AMBERJET™ IR-120H, AMBERLITE™ IRC-84, AMBERLITE™ IRC-84SP, AMBERLITE™ IRC-96K, AMBERLITE™ IRP-64, AMBERLITE™ IRP-69, AMBERLITE™ XE-64W, AMBERJET™ 1200H, AMBERJET™ HP1110Na, NAFION™ NR50, and mixtures thereof.

The polymer or copolymer backbone of an ion exchange resin is prepared by polymerizing a monomer or co-polymerizing a mixture of monomers. If the acid functional group is not present in at least one of the monomers present, at least one of the monomers must be susceptible to post-polymerization functionalization. One or more of the monomers present also serve as a crosslinking monomer to impart desired physical/chemical properties. Many such properties depend on the degree of polymerization, post-polymerization functionalization conditions, degree of functionalization, and others. In general, lighter colored translucent or opaque IER's are preferred. However, more highly colored IERs may be used where they are incorporated into multilayer, sandwich structures created, for example, by both preceding and following an IER application step with application steps for binder compositions.

Some IER's are translucent. This may be a desirable property. For example, if a some of these lighter colored translucent IERs are visible on the surface of the finished coating, light reflective properties can be enhanced. Thus, translucent IERs may either augment the reflective properties of glass beads used in traffic markings or reduce the amount of glass beads needed, thus reducing the overall cost of applying the paint.

It was also discovered that a "used" or "spent" ion exchange resin may exhibit the same or similar useful absorption characteristics as a new, or fresh, IER when substituted for that new, or fresh, IER. The terms "used" and "spent" are used interchangeably herein to mean a resin has been previously used in other applications or exposed to other chemical reaction conditions. For example, an acid resin such AMBERLYST™ 15 which has been previously used as a catalyst in an ether synthesis reaction (such as synthesis of methyl t-butyl ether [MTBE] from methanol and isobutene) may be as effective, or nearly as effective, in the present invention as fresh AMBERLYST™ 15. Similarly, an IER may have been used for other ion-exchange uses. In general, the cost of a used IER is expected to be much lower than that of a fresh IER.

IERs may also provide additional benefits such as anti-skid provided that they are used in the quantities and have the particle sizes as disclosed herein.

IER beads may be applied in dry form or they may contain water at levels as high as 95% by weight, based on total combined weight of the IER solids and the water contained in the IER. The preferred water content is 0 to 40%.

It is also within the scope of the present invention to use a mixture of different resins of the same structure type (different gellular resins or different macroporous types) or different types (one or more gellular types with one or more macroporous types). An example of a gellular IER is AMBERLITE™ IRC-84SP and an example of a macroporous IER is AMBERLITE™ IRC-64.

Absorbers can also be organic superabsorbing polymers (SAPs). The water-absorbent resins of this class heretofore known to the art include partially neutralized crosslinked polyacrylic acids (JP-A-55-84,304, JP-A-55-108,407, JP-A-55-133,413, US-A-4,654,039, and US-A-4,286,082), hydrolyzed starch-acrylonitrile graft polymers (JP-A-46-43,995 and US-A-3,661,815), neutralized starch-acrylic acid graft polymers (JP-A-51-125,468 and US-A-4,076,663), saponified vinyl acetate-acrylic ester copolymers (JP-A-52-14,689 and US-A-4,124,748), hydrolyzed acrylonitrile copolymers or acrylamide copolymers (JP-A-53-15,959, US-A-3,935,099 and US-A-3,959,569), crosslinked derivatives thereof, crosslinked carboxymethyl cellulose (US-A-4,650,716 and US-A-4,689,408, and crosslinked polymer of cationic monomers (JP-A-58-154,709, JP-A-58-154,710, US-A-4,906,717, US-A-5,075,399, and EP-B-0304,143), crosslinked isobutylenemaleic anhydride copolymers (US-A-4,389,513), and crosslinked copolymers of 2-acrylamide-2-methylpropanesulfonic acid with acrylic acid (EP-B-068,189), for example.

Suitable organic super absorbent polymers (SAP's) include polymers prepared from at least one monomer selected from the group consisting of an acrylic monomer, a methacrylic monomer and mixtures thereof, and derivatives such as salts of such polymers. Used herein, the term SAP denotes super absorbent polymer. Examples are partially neutralized crosslinked polyacrylic acids, hydrolyzed starch-acrylonitrile graft polymers, neutralized starch-acrylic acid graft polymers, saponified vinyl acetate-acrylic ester copolymers, hydrolyzed acrylonitrile copolymers or acrylamide copolymers, crosslinked derivatives thereof, crosslinked carboxymethyl cellulose, crosslinked polymers of cationic monomers, crosslinked i-butylene-maleic anhydride copolymers, crosslinked copolymers of 2-acrylamide-2-methylpropanesulfonic acid with acrylic acid, and mixtures thereof. The neutralization or partial neutralization may be achieved by reacting a suitable SAP with a base such as sodium hydroxide, potassium hydroxide, ammonium hydroxide, and others.

US-A-5,075,399 discloses SAPs that are copolymers of ampholytic ion pair monomers and acrylic comonomers including acrylamide, methacrylamide, acrylic acid, methacrylic acid, salts of acrylic acid, and salts of methacrylic acid. The ampholytic ion pair monomers are, for example, combinations of the ammonium cation 2-methacryloyloxyethyltrimethylammonium and an anion selected from the group consisting of 2-acrylamido-2-methylpropane sulfonate, 2-methacryloyloxyethane sulfonate, vinyl sulfonate, styrene sulfonate and combinations thereof.

US-A-4,654,039 discloses SAPs that are hydrogel-forming polymer compositions. These SAPs are substantially water-insoluble, slightly crosslinked, partially neutralized polymers prepared from unsaturated polymerizable, acid group-containing monomer and crosslinking agents.

US-A-4,909,717 discloses water absorbing resin based on acrylic acid and on dialkylaminoalkyl acrylate. The SAP resin includes from 40 to 60% on a molar basis of acrylic acid, all or part of which is in salt form, and 60 to 40% on a molar basis of at least one dialkylaminoalkyl acrylate at least partially in salt form, or quaternized. The SAP resin is polymerized in aqueous solution or inverse emulsion in the presence of at least one free-radical initiator.

Crosslinked polymers and copolymers made from acrylic or methacrylic monomers, particularly acrylic acid and/or methacrylic acid are preferred SAP's. Examples of such monomers include acrylic acid, methacrylic acid, methyl acrylate, methyl methacrylate, and other acrylate and methacrylate esters having C₂ to C₂₀ alkyl groups. The polymers or copolymers are usually in the carboxylic acid form(-COOH), or completely or partially converted to the carboxylic acid form if ester monomers are used. In addition, as mentioned herein above, some or all of the carboxylic acid functional groups (-COOH) may be neutralized with a metal ion or a base having a cation such as NH₄⁺, Li⁺, Na⁺, K⁺, Rb⁺, Cs⁺, Be⁺⁺, Mg⁺⁺, Ca⁺⁺, Sr⁺⁺, Ba⁺⁺, Zn⁺⁺, Al⁺⁺⁺ and mixtures thereof. Organic ammonium cations also may be used. Examples include R¹R²R³R⁴N⁺ where the R's are independently selected from C₁-C₁₂ alkyl groups, phenyl, substituted phenyl groups, aryl groups and substituted aryl groups, such as (CH₃)₄N⁺, (C₂H₅)₄N⁺ and mixtures thereof. Examples of commercially available SAP materials include AQUALIC® CA (Nippon Shokubai Kagaku Kogyo Co., Ltd.). SAP's in both fibrous and particular forms may be used. SAP's in particulate form (as particles) are preferred. The range of suitable particle size is discussed elsewhere herein.

Yet another type of absorber includes materials like AMBERSORB™, activated carbons, carbon blacks, pyrolyzed polyacrylonitrile or other types of carbonaceous materials, available from the Rohm and Haas Company, Philadelphia, PA.

Molecular sieves, or molecular sponges, including many natural and synthetic zeolites which have liquid or gas absorption and/or adsorption properties, may be used as the absorber for the present invention. Synthetic zeolites are generally white and natural zeolites may be white, off-white, or colored. Off-white or colored molecular sieves or zeolites may be limited to applications where color of the coating is compatible or not important. Examples of molecular sieves include metal-containing or acid form zeolite or molecular sieve such as 3A, 4A, 5A, 10X, 13X, Y, ZSM-5, ZSM-11, beta, faujasite, erionite, SAPO-5, SAPO-11, SAPO-34, ALPO-5, and mixtures thereof. While the more hydrophobic type zeolites or silicas such as silicalite or high Si/Al atomic ratio (greater than 100) ZSM-5 may be used, they are not particularly preferred for the present invention.

Other inorganic materials such as aluminas, silica-aluminas or their mixtures also may be used alone or in combination with other disclosed absorbers. Examples include aluminas such as α-alumina, γ-alumina, θ-alumina, η-alumina, amorphous silica-aluminas, crystalline silica-aluminas, diatomaceous earth (such as CELITE® or kieselguhr), and mixtures thereof. Materials like kieselguhr also have been known to be useful as extenders by forming a mixture with the binder composition prior to application of the paint. Magnesium silicates such as talc may also be used as absorbers.

The molecular sieves and other inorganic materials are available from a number of companies, including Mobil, Union Carbide, W. R. Grace, Aldrich, Johnson Matthey, and others.

Hollow sphere polymer particles are also useful as absorbers in the present invention. The hollow sphere polymer particles are also referred to herein as voided latex particles. The voided latex particles useful in the method of the invention have a particle size of 50 nm to 2,000 nm and a void fraction of 10% to 75%. The voided latex particles useful in the method of the invention have a particle size of, preferably, 50 nm to 1,100 nm, and, more preferably, 50 to 700 nm. Preferably, the voided latex particles useful in the method of the invention have a single void. All ranges for particle sizes are inclusive and combinable. The particle size and void fraction of the voided latex particles may be determined by conventional techniques known in the art, including microscopy and the Brookhaven Model BI-90 Particle Sizer supplied by Brookhaven Instruments Corporation, Holtsville, New York, which employs a quasi-elastic light scattering technique to measure the size of the particles.

The voided latex particles useful in the method of the invention have a glass transition temperature, as measured by differential scanning calorimetry at a rate of 20°C/minute, of at least 20°C and, more preferably, of at least 50°C, these ranges being inclusive and combinable. A higher glass transition temperature contributes to a harder particle that is less likely to collapse during storage prior to use.

The voided latex particles useful in the invention may be prepared by conventional polymerization processes known in the art, such as those disclosed in US-A-3,784,391; US-A-4,798,691; US-A-4,908,271; US-A-4,972,000; EP-B-0,915,108; and Japanese Patent Applications 60/223,873; 61/62510; 61/66710; 61/86941; 62/127336; 62/156387; 01/185311; 02/140272. Preferably, the voided latex particles are prepared according to US-A-4,427,836; US-A-4,469,825; US-A-4,594,363, US-A-4,880,842 and 5,494,971 and EP-B-0,915,108. Voided latex particles, such as ROPAQUE™ Preferably, the voided latex particles are prepared according to US-A-4,427,836; US-A-4,469,825; US-A-4,594,363, US-A-4,880,842 and US-A-5,494,971 and EP-B-0,915,108. ROPAQUE™ OP-62 is available from Rohm and Haas Company of Philadelphia, Pennsylvania.

Glass beads, quartz beads, ceramic beads, and mixtures thereof are collectively referred to herein as "glass beads". Component G, which includes glass beads, may, optionally, be applied to the surface of the substrate in the method of the present invention. Component G may be applied to the surface in a separate step of the method of the present invention, or in a step that is simultaneous with one or more of the steps of application of components A, B, and C. A primary function of the glass beads is to provide reflective properties to coatings in general and roadway markings in particular. The particle size of glass beads is in the range of from 50 µ (micrometers) to 1500 µ, preferably 80 µ to 1250 µ, more preferably in the range of from 100 µ to 1000 µ. Glass beads can be obtained from various commercial sources like Potters Industries, Inc. (PQ Corporation), Swarco Industries, Inc., Minnesota Mining and Manufacturing Company (3M), and others. Typical glass beads useful for this application are those described in AASHTO Designation M 247-81 (1993), developed by the American Association of State Highway and Transportation Officials (Washington, DC). The beads will generally be applied at a rate of 0.72 kg/L to 2.9 kg/L or more of paint for night and adverse weather visibility.

An "auxiliary material" also may be mixed with one or more of components A, B, C, and G to provide additional benefits. It is acceptable to add auxiliary material to one or more of the components of the composition provided that its presence does not cause premature destabilization of either the component or the coating composition as a whole. A portion of the glass beads, quartz beads or ceramic beads which generally provide reflective properties to coating in general, and roadway markings in particular, may be viewed as such an "auxiliary material". This will be true for those glass beads that are completely buried below the surface of the dried coating to the extent that they do not interact with incident light in a significant way.

Other auxiliary materials may also be combined with any of components A, B, C, and G. These other auxiliary materials include those known to provide anti-skidding properties, such as various forms of quartz silicas. In addition, other auxiliary materials may provide certain physical/chemical benefits such as additional drying acceleration, uniformity of drying, better flow properties, or a combination thereof. It is important that an auxiliary material maintain its desirable performance features and those of components A, B, C, and G during application. For this reason, inclusion of some auxiliary materials with certain components (A, B, C, or G) must be avoided. For example, these auxiliary materials include salts that are hygroscopic and/or soluble in water, such as CaC₁₂, calcium acetate, or acids, such as acetic acid, citric acid and others. It would not be appropriate to combine these hygroscopic substances with aqueous components B or C prior to application to a substrate because those salts would lose their ability to absorb water upon application and because they might destabilize components B or C prior to application. If the auxiliary materials are to be mixed with any of components A, B, C, or G prior to application, they must be chemically and physically compatible with those components.

The absorber, with or without any other auxiliary materials or other substances, and the binder composition must be placed in separate components (packs). The component including the absorber (component A) and the component(s) including the binder composition(s) (components B and C) as part of the coating formulation must be kept separate until the time of application onto the surface of a substrate. Substrates include highway, road, street, runway, parking area, tarmac, pavement and roof, and surface material(s), masonry, asphalt, concrete, cement, stone, metals such as aluminum, stainless steel, carbon steel, etc.

Although talc may itself be used as an absorber, it may also be combined with other absorbers to impart improved flow characteristics and lighter color. Talc is particularly useful in this regard when the absorber is, for example, an IER having a high water content because the talc prevents the moisture laden IER beads from adhering to one another, a condition that would adversely manifest itself as clumping, compacting, and bridging during storage and application.

Table I sets forth several ways by which components A, B, C, and G may be applied to a substrate in a series of sequential steps. Table I denotes "sequential intervals" in which one or more steps may occur simultaneously. When more than one of components A, B, C, and G are being added in sequential interval, a comma is used in Table I to denote simultaneous addition. Inclusion in parentheses further denotes premixing. Although not explicitly stated in Table I, it is also within the scope of the present invention that any of the sets of simultaneous and sequential steps of any method of Table I may be repeated one or more times or in combination with other steps in other methods. In other words, it is understood that there are other variations that may be used that repeat one or more of the steps. Further, it is possible to use component A in multiple steps of a single method provided that component A is not premixed with either component B or component C.

**Table I.**

| **Order of Application of Components** | | | | | | | | | |
|---|---|---|---|---|---|---|---|---|---|
| Method | Sequential Interval | | | | Method | Sequential Interval | | | |
| | 1 | 2 | 3 | 4 | | 1 | 2 | 3 | 4 |
| 1 | A, B | | | | 32 | B | C, A | | |
| 2 | A, B, G | | | | 33 | B, G | C, A | | |
| 3 | (A,G), B | | | | 34 | (B,G) | C, A | | |
| 4 | A, (B,G) | | | | 35 | B | C, A, G | | |
| 5 | A, B | G | | | 36 | B | C, (A,G) | | |
| 6 | B | A | | | 37 | B | (C,G), A | | |
| 7 | B, G | A | | | 38 | B | G | C, A | |
| 8 | (B,G) | A | | | 39 | B | C, A | G | |
| 9 | B | A, G | | | 40 | A | B | C | |
| 10 | B | (A,G) | | | 41 | A, G | B | C | |
| 11 | B | G | A | | 42 | (A,G) | B | C | |
| 12 | B | A | G | | 43 | A | B, G | C | |
| 13 | B, G | A | | | 44 | A | (B,G) | C | |
| 14 | (B,G) | A | | | 45 | A | B | C, G | |
| 15 | A | B | | | 46 | A | B | (C,G) | |
| 16 | A, G | B | | | 47 | A | G | B | C |
| 17 | (A,G) | B | | | 48 | A | B | G | C |
| 18 | A | B, G | | | 49 | A | B | C | G |
| 19 | A | (B,G) | | | 50 | B, A | C | | |
| 20 | A | G | B | | 51 | B, A, G | C | | |
| 21 | A | B | G | | 52 | B,(A,G) | C | | |
| 22 | C | A | B | | 53 | (B,G), A | C | | |
| 23 | C, G | A | B | | 54 | B, A | C, G | | |
| 24 | (C,G) | A | B | | 55 | B, A | (C,G) | | |
| 25 | C | A, G | B | | 56 | B, A | G | C | |
| 26 | C | (A,G) | B | | 57 | B, A | C | G | |
| 27 | C | A | B, G | | | | | | |
| 28 | C | A | (B,G) | | | | | | |
| 29 | C | G | A | B | | | | | |
| 30 | C | A | G | B | | | | | |
| 31 | C | A | B | G | | | | | |
| Sequential interval 1 precedes 2, followed by 3, and then 4. If two or more components are in the same box, these components are applied in simultaneous steps. Components in parentheses are pre-mixed prior to application. | | | | | | | | | |
| A: Component A, including absorber; | | | | | | | | | |
| B: Component B, including binder polymer; | | | | | | | | | |
| C: Component C, including binder polymer; | | | | | | | | | |
| G: Component G, including glass beads. | | | | | | | | | |

The components of the aqueous coating composition of the present invention, and particularly any component containing the binder composition, may be applied to the surface of a substrate by a number of ways known to those having ordinary skill in the art. Some examples are brushing, spraying, extrusion, and combinations thereof.

All of the methods of application listed in Table I are useful embodiments of the present invention. Of the methods of application listed in Table I, those in which component A is applied either during or after the first step in which either of components B or C is applied are preferred (methods 1-14, 22-39 and 50-57). More preferred are methods in which component A is applied after the first step in which either of components B or C is applied (methods 6-14 and 22-39). Most preferred are methods including both component B and component C in which component A is applied after the step including the first applied of components B and C, and before or during the step including the second applied of components B and C (methods 22-39). All of these ranges relating the steps of incorporation of components A, B, and C are inclusive and combinable.

It is believed that coating the surface of the substrate with an aqueous binder composition prior to, or during application of absorber reduces the tendency of the absorber to bounce away from that surface, with possible concomitant loss of fast-drying capability. It is further believed that applying a second aqueous binder composition in a step subsequent to application of absorber is particularly effective at trapping the absorber in intimate contact with the aqueous binder composition so that the ability of the absorber to speed drying and eliminate fracture is maximized.

To maximize the retro-reflective capability of the glass beads, application of component G in one of the last two steps of any method is preferred, more preferred is addition of component G in the last applied step, and most preferred is addition of component G (*i.e.,* in a step excluding components B and C) in the last applied step. All of these ranges relating the steps of incorporation component G with the steps of incorporation of components A, B, and C are inclusive and combinable.

The absorber may be applied in conjunction with the acid or salt solution treatments disclosed in EP-B-0,200,249 and described herein above.

Absorber may, in addition, be applied after the application of the paint has been completed. Exercise of this option may be particularly useful for preparation of roadway markings. This use can be by design, or as a remedial step. The term "remedial step" means that if a roadway marking crew has applied by the usual means an aqueous traffic paint and they find that it is not drying quickly enough, they can accelerate drying by applying the absorber particles in accordance with the invention. One such situation is in the case of an aqueous roadway marking operation which commences under favorable climatic conditions (*e.g.* 20°C and 50% relative humidity), but is being finished under unfavorable conditions that include a lower temperature of 0°C or below. The more recently applied aqueous roadway markings will dry more slowly than expected and with immediate danger of fracture formation and this will cause prolonged traffic flow interruption, as well as formation of inferior roadway markings. In such a case, the roadway-marking crew can post-treat the more recently applied roadway markings with the absorber particles. This will cause an increase of drying rate of the more recently applied roadway markings and inhibition of the growth of large water crystals within those markings, allowing faster resumption of normal traffic flow, as well as preparation of uniform, fracture-free roadway markings.

AMBERJET™, AMBERLYST™, AMBERLITE™, AMBERSORB™, AND ROPAQUE™, are trademarks of Rohm and Haas Company, NAFION™ is a trademark of E. I. duPont De Nemours and Company, CELITE™ is a trademark of Johns-Manville Corporation, and AQUALIC® is a trademark of Nippon Shokubai Kagaku Kogyo Co., Ltd.

### Examples

### Test for Film Cracking at Sub-Freezing Temperatures

The test paints A and B described in Table II were separately applied to a 10.2 cm (4 inch) by 30.5 cm (12 inch) aluminum panel using a drawdown blade having a gap of 500 µm(microns) (20 mils), followed immediately by the application of a given absorber to the bottom half of the panel. A drawdown blade gap of 500 microns delivers a wet film thickness of about 330 microns to the surface of the aluminum. Each absorber was applied in such a fashion that it covered about one half (1/2) of the coated aluminum panel, with the other 1/2 remaining untreated. Absorbers were applied using a hand shaker such that the coverage of the absorber was evenly distributed across the surface, and applied in an amount approximating 50 grams per square meter of paint surface area.

After application of the coating, with and without the treatment of absorber, the panels were immediately placed in a Hotpack Model 5417532 incubator (Hotpack Corporation, Philadelphia, PA) maintained at a temperature of 0° C (32°F) and a relative humidity of 90%. The coated panels were allowed to dry in the incubator at this temperature and relative humidity for one or two hours as specified in Table II, and then removed and immediately put in a standard laboratory freezer. The temperature in this freezer during the test was minus 18°C (0°F). The test panels were removed from the freezer after 18 hours and allowed to warm up to room temperature. The density of the cracks in the dried film on the top (no absorber) and bottom (absorber applied) halves of the test panels were visually rated as shown in Table III.

### Preparation of Low Tg Polymer A.

To 880 g of deionized (DI) water under a nitrogen atmosphere at 90°C was added 10.7 g ammonium bicarbonate dissolved in 80 g DI water, 7.1 g ammonium persulfate dissolved in 80 g DI water and 156 g polymer seed latex (solids content 42% average particle diameter of 60 nm) followed by 20 g of DI water to form a reaction mixture to which the following monomer mixture was then added over 3 hours at 86°C along with a solution of 3.6 g ammonium persulfate dissolved in 80 g DI water followed by 50 g DI water.

| Monomer mixture: | in grams (g) |
|---|---|
| DI water | 600 |
| Sodium lauryl sulfate (28% active) | 31.5 |
| butyl acrylate | 1224 |
| methylmethacrylate | 789 |
| methacrylic acid | 26.5 |
| n-dodecylmercaptan | 25.5 |

At the end of the polymerization, 0.01 g FeSO4 in 9 g DI water, 1.7 g t-butylhydroperoxide in 20 g DI water and 0.6 g isoascorbic acid in 20 g DI water were added at 60°C to the reaction product. Ammonium hydroxide was added to give a final pH =10.5. The resulting latex polymer had a solids content of 50.2 % and an average particle diameter of 221 nm.

### Preparation of Paints A and B.

**Table II.**

| **Test Paint Composition** | | |
|---|---|---|
| Formulation In®gredient: with mixing, add in the following order: | Paint A (grams) | Paint B (grams) |
| Low Tg polymer A | 214.3 | |
| High Tg polymer B (1) | | 227.8 |
| Water | 3.1 | |
| Tamol™ 901 | 2.7 | 2.5 |
| Surfynol™ CT-136 | 1.4 | 1.4 |
| Drewplus™ L-493 | 2.7 | 2.7 |
| Ti-Pure™ R-900 | 50.0 | 50.0 |
| Omyacarb™ 5 | 379.3 | 380.3 |

| **Mix the above for 10 minutes, then add:** | | |
|---|---|---|
| Methanol | 15.0 | 15.0 |
| Texanol™ | 3.2 | 11.5 |
| Water | 27.7 | 12.0 |
| Acrysol™ SCT-275 | 0.3 | 0.25 |
| **Total weight (grams)** | **699.7** | **703.45** |
| | | |

| | | |
|---|---|---|
| (1) High Tg (∼30°C) polymer B is Fastrack™ 3427 available from Rohm and Haas Co., Philadelphia, Pennsylvania. | | |

### Comparative Examples A-D and Examples 1-4. Improvements resulting from drying multi-component aqueous coating compositions containing Absorbers at temperatures at or below 0°C.

**Table III.**

| **Cracking Rating: Comparative Examples A-D; Examples 1-4** | | | | |
|---|---|---|---|---|
| Section of Test Panel | Comparative Example A | Comparative Example B | Comparative Example C | Comparative Example D |
| Top half: No absorber (Comparative) | 330 µm paint A¹ | 330µm paint A | 330 µm paint A | 330 µm paint B |
| Time at 0°C | 2 hours | 2 hours | 1 hour | 2 hours |
| Time at -18°C | 18 hours | 18 hours | 18 hours | 18 hours |
| **Cracking density rating** | **very heavy** | **very heavy** | **very heavy** | **very heavy** |

| | Example 1 | Example 2 | Example 3 | Example 4 |
|---|---|---|---|---|
| Bottom half: with Absorber | 330 µm paint A with ∼50g/m2 Amberlite™ 252H ion exchange resin² | 330 µm paint A with ∼50g/m2 ASAP™ 2000 superabsorbent polymer³ | 330 µm paint A with ∼50 g/m2 Amberlite™ 252H ion exchange resin² | 330 µm paint B with ∼50 g/m2 Amberlite™ 252H ion exchange resin² |
| Time at 0°C | 2 hours | 2 hours | 1 hour | 2 hours |
| Time at -18°C | 18 hours | 18 hours | 18 hours | 18 hours |
| **Cracking density rating** | **none** | **none** | **light** | **medium** |

| | | | | |
|---|---|---|---|---|
| (1) The paint compositions are described in Table II. Application of the paint using a drawdown blade having a gap of 500 µm (20 mils) creates a wet film with a thickness of 330 µm. | | | | |
| (2) AMBERLITE™ 252H is an ion exchange resin available from Rohm and Haas Company, Philadelphia, Pennsylvania. The moisture content of this IER was reduced to 25% for this test.s | | | | |
| (3) ASAP™ 2000 is a superabsorbent polymer from BASF Corporation, Aberdeen. Mississippi. | | | | |

These examples show that addition of the selected absorbers under the disclosed conditions improved the film formation, as indicated by the density of cracks in these paint test films, when they were dried at temperatures equal to or below 0°C.

## Claims

1. A method for preparing a fracture-resistant multi-component coating on a surface of a substrate, said method comprising the steps of:
(i) applying component A to said surface;
(ii) applying component B to said surface; and
(iii) allowing said coating to dry;
wherein said component A comprises at least one water insoluble absorber selected from the group consisting of organic super absorbent polymer, ion-exchange resin, hollow sphere polymer, molecular sieve, talc, inorganic absorber, porous carbonaceous material, non-porous carbonaceous material, and mixtures thereof;
wherein said component B comprises a first aqueous binder composition; and
wherein the temperature of said coating is no greater than 0°C at some point during said method.

2. The method of claim 1, further comprising the step of applying component C comprising a second aqueous binder composition to said surface.

3. The method of claim 1, further comprising the step of applying component G comprising glass beads to said surface.

4. The method of claim 1, further comprising the step of applying to said surface an aqueous solution which comprises a substance selected from the group consisting of an acid, a water soluble salt and mixtures thereof, wherein said acid is an acid selected from the group consisting of acetic acid, citric acid and mixtures thereof.

5. The method of claim 1, wherein said applying of said component A and said applying of said component B occur simultaneously.

6. The method of claim 1, wherein said applying of said component A occurs before said applying of said component B.

7. The method of claim 1, wherein said applying of said component A occurs after said applying of said component B.

8. The method of claim 5, further comprising the step of applying component C comprising a second aqueous binder composition to said surface before said applying of said component A and said applying of said component B.

9. The method of claim 6 or 7, further comprising the step of applying component C comprising a second aqueous binder composition to said surface after said applying of said component A and said applying of said component B.

10. The method of claim 7, further comprising the step of applying component C comprising a second aqueous binder composition to said surface simultaneously with said applying of said component A.
